# EUROPÄISCHE PATENTANMELDUNG

(11) **EP 1 054 041 A1**
(43) Veröffentlichungstag der Anmeldung: **22.11.2000**
(21) Anmeldenummer: 00110338.1
(22) Anmeldetag: 13.05.2000
(51) Int. Cl.: C09B 62/085, C09B 62/51, D06P 3/66

(54) **Neue fluortriazinhaltige brillantgelbe Farbstoffe, Verfahren zu ihrer Herstellung und ihre Verwendung zum Färben von hydroxy- und amidgruppenhaltigen Materialien**

(30) Priorität: 19.05.1999 DE 19922825
(71) Anmelder: DyStar Textilfarben GmbH & Co. Deutschland KG, 60318 Frankfurt am Main (DE)
(72) Erfinder: Dannheim, Jörg, Dr., 60489 Frankfurt am Main (DE)

(57) **Zusammenfassung**

Es werden wasserlösliche Farbstoffe der allgemeinen Formel (1) 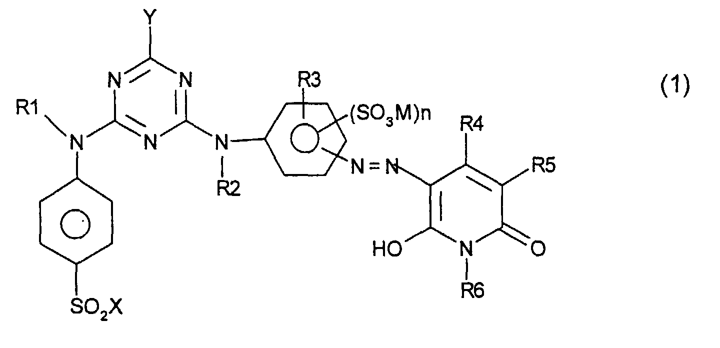 beschrieben, worin R¹ bis R^{6,} M, n, X und Y die in Anspruch 1 beschriebene Bedeutung haben, Verfahren zu ihrer Herstellung, sowie ihre Verwendung zum Färben oder Bedrucken von hydroxy- oder amidgruppenhaltigem Material.

## Beschreibung

Die Erfindung liegt auf dem technischen Gebiet der faserreaktiven Farbstoffe.

Farbstoffe mit faserreaktiven Eigenschaften werden in großem Umfang für das Färben und Bedrucken von textilen Fasermaterialien eingesetzt. Obwohl eine große Anzahl von brauchbaren faserreaktiven Farbstoffen mit unterschiedlichen Eigenschaften für verschiedene Anwendungsbereiche zur Verfügung steht, kann der erreichte Stand der Technik angesichts der hohen Anforderungen in Bezug auf Eignung für bestimmte Färbeverfahren und das Echtheitsniveau der Färbungen vielfach nicht voll befriedigen, wie beispielsweise schon in den Patentanmeldungen EP-A 85025, EP-A 85654 und DE-A 2927102 beschrieben. Die Bereitstellung weiterer verbesserter faserreaktiver Farbstoffe war daher dringend erwünscht.

Der vorliegenden Erfindung lag die Aufgabe zugrunde, neue brillantgelb färbende faserreaktive Farbstoffe zu finden, die eine hohe Farbstärke, gute Auswaschbarkeit, gute Waschechtheiten und gute Kombinierbarkeit aufweisen.

Mit der vorliegenden Erfindung wurde diese Aufgabe durch Auffindung der nachstehend angegebenen und definierten fluortriazinhaltigen Farbstoffe der allgemeinen Formel (1) gelöst.

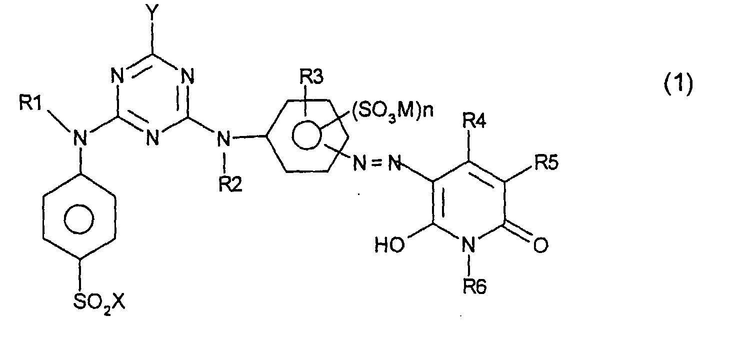

In Formel (1) bedeuten:
- M: ist Wasserstoff oder ein Alkalimetall, wie Natrium, Kalium oder Lithium, oder ein Äquivalent eines Erdalkalimetalls, bevorzugt Wasserstoff oder ein Alkalimetall;
- R¹: ist ein Wasserstoffatom oder eine geradkettige oder verzweigte Alkylgruppe von 1 bis 4 C-Atomen, wie die Methyl- oder Ethylgruppe, die durch Halogen, wie Chlor oder Brom, Hydroxy, Cyano oder Sulfo substituiert sein kann, bevorzugt Wasserstoff;
- R²: ist ein Wasserstoffatom oder eine geradkettige oder verzweigte Alkylgruppe von 1 bis 4 C-Atomen, wie die Methyl- oder Ethylgruppe, die durch Halogen, wie Chlor und Brom, Hydroxy, Cyano oder Sulfo substituiert sein kann, bevorzugt Wasserstoff;
- R³: ist Wasserstoff oder eine geradkettige oder verzweigte Alkylgruppe von 1 bis 4 C-Atomen, die durch Halogen, wie Chlor und Brom, Hydroxy oder Cyano substituiert sein kann, eine Alkoxygruppe von 1 bis 4 C-Atomen, die durch Halogen, wie Chlor und Brom, Hydroxy oder Cyano substituiert sein kann, Halogen, wie Fluor und Chlor, Carboxy oder Phenyl, bevorzugt Wasserstoff;
- R⁴: ist ein geradkettiger oder verzweigter Alkylrest von 1 bis 4 C-Atomen oder Phenyl;
- R⁵: ist Carbonamido, Cyano oder Sulfomethyl, bevorzugt Carbonamido;
- R⁶: ist ein geradkettiger oder verzweigter Alkylrest von 1 bis 4 C-Atomen;
- Y: ist Fluor;
- n: ist die Zahl 0, 1 oder 2;
- X: ist Vinyl oder Ethyl, das in β-Stellung durch einen Substituenten substituiert ist, der unter Einwirkung eines alkalisch wirkenden Mittels unter Bildung der Vinylgruppe eliminierbar ist, wie beispielsweise Chlor, Brom, p-Toluylsulfonyloxy, Phosphato und insbesondere Sulfato.

Die Gruppen "Sulfo", "Phosphato" und "Sulfato" schließen sowohl deren Säureform als auch deren Salzform ein. Demgemäß bedeuten Sulfogruppen Gruppen entsprechend der allgemeinen Formel -SO₃M , Phosphatogruppen Gruppen entsprechend der allgemeinen Formel -OPO₃M₂, und Sulfatogruppen Gruppen entsprechend der allgemeinen Formel -OSO₃M
in welchen
- M: die obengenannte Bedeutung hat.

Geradkettige oder verzweigte Alkylgruppen mit 1 bis 4 C-Atomen bedeuten insbesondere Methyl, Ethyl, n-Propyl, i-Propyl, n-Butyl, i-Butyl, sek. Butyl und tert. Butyl. Bevorzugt sind Methyl und Ethyl. Analoges gilt für Alkoxygruppen mit 1 bis 4 C-Atomen.

Von den Farbstoffen der allg. Formel (1) sind diejenigen bevorzugt, in denen sich die Aminogruppen der Verbindungen der allgemeinen Formel (3) 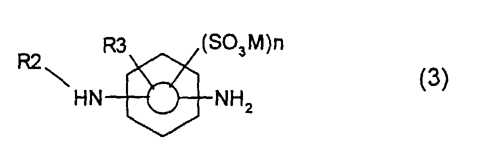 in meta-Position zueinander befinden, sowie in denen
- R¹: Wasserstoff oder eine Alkylgruppe mit 1 bis 4 C-Atomen, insbesondere Wasserstoff,
- R²: Wasserstoff oder eine Alkylgruppe mit 1 bis 4 C-Atomen, insbesondere Wasserstoff,
- R³: Wasserstoff,
- R⁴: eine Alkylgruppe mit 1 bis 4 C-Atomen, insbesondere Methyl,
- R⁶: eine Alkylgruppe mit 1 bis 4 C-Atomen, insbesondere Methyl oder Ethyl,
- Y: Fluor,
- n: die Zahl 1 oder 2, insbesondere bevorzugt 1 ist und
- M, R⁵ und X: die o. g. Bedeutungen besitzen.

Die erfindungsgemäßen Farbstoffe können teilweise als Farbstoff in der Vinylsulfon-Form mit X gleich Vinyl als auch als Farbstoff, worin X eine in β-Stellung durch einen alkalisch eliminierbaren Substituenten substituiert ist zusammen als Gemisch vorliegen, wobei der Farbstoffanteil des jeweiligen Farbstoffes mit der Vinylsulfonylgruppe in dem Gemisch bevorzugt bis zu etwa 50 Mol-% vorhanden ist.

Die erfindungsgemäßen Farbstoffe können als Präparation in fester oder in flüssiger (gelöster) Form vorliegen. Sie enthalten im allgemeinen die bei wasserlöslichen und insbesondere faserreaktiven Farbstoffen üblichen Elektrolytsalze, wie Natriumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 8 einzustellen vermögen, wie Natriumacetat, Natriumborat, Natriumhydrogencarbonat, Natriumdihydrogenphosphat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die Farbstoffe als Farbstoffpulver mit einem Gehalt an Elektrolytsalz, das auch als Stellmittel bezeichnet wird, von 10 bis 80 Gew.-%, bezogen auf das Farbstoffpulver bzw. die Präparation, vor. Diese Farbstoffpulver können zudem die erwähnten Puffersubstanzen in einer Gesamtmenge von bis zu 5 %, bezogen auf das Farbstoffpulver, enthalten.

Sofern die erfindungsgemäßen Farbstoffe in wäßriger Lösung vorliegen, liegt der Gehalt der erfindungsgemäßen Farbstoffe in diesen wäßrigen Lösungen zwischen 0,1 und 55 Gew.-%, in der Regel zwischen 5 und 50 Gew.-%., wobei der Elektrolytsalzgehalt in diesen wäßrigen Lösungen bevorzugt unterhalb 10 Gew.-%, bezogen auf die wäßrige Lösung beträgt. Die wäßrigen Lösungen (Flüssigpräparationen) enthalten die erwähnten Puffersubstanzen in der Regel in einer Menge von 0,1 bis 5 Gew.-%, bevorzugt von 0,3 bis 2 Gew.-%.

Die erfindungsgemäßen Farbstoffe zeichnen sich durch hohe Farbstärke, gute Auswaschbarkeit, gute Waschechtheiten, gute Löslichkeit und insbesondere durch gute Kombinierbarkeit beispielsweise mit Farbstoffen des Typs Procion H-EXL, Procion H-E, Remazol H, Drimaren X und besonders mit Phthalocyaninfarbstoffen aus.

Die vorliegende Erfindung betrifft weiterhin Verfahren zu Herstellung der Farbstoffe gemäß Formel (1), dadurch gekennzeichnet, daß sie aus einem aromatischen Amin der allgemeinen Formeln (2) 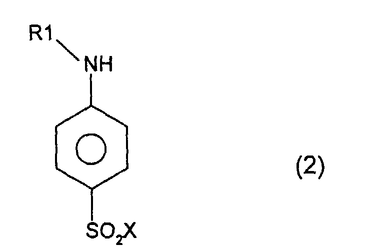 worin R¹ und X die oben genannten Bedeutungen haben, einem Trifluortriazin, einem aromatischen Amin der allgemeinen Formel (3) 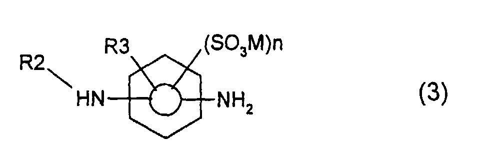 worin die Reste R², R³, M und n die oben genannten Bedeutungen haben, und einer Komponente der allgemeinen Formel (4) 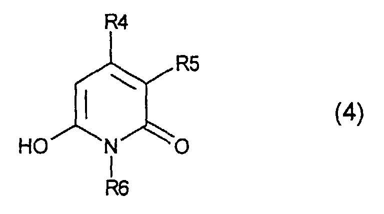 worin die Reste R⁴, R⁵ und R⁶ die oben genannten Bedeutungen haben, aufgebaut wird.
Beispielsweise kann man ein Amin der allgemeinen Formel (6) 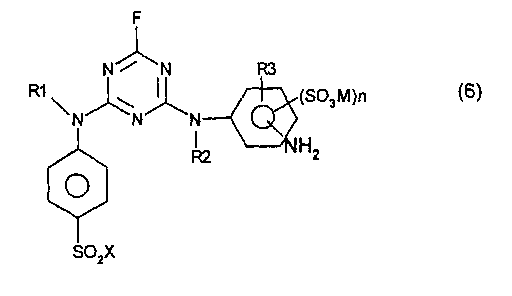 worin R¹, R², R³, X, M und n wie oben angegeben definiert sind, diazotieren und auf eine Verbindung der allgemeinen Formel (4) 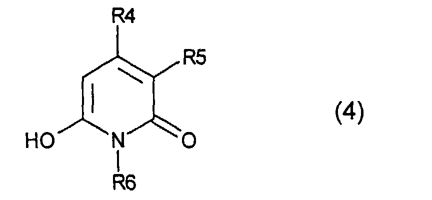 worin R⁴-R⁶ wie oben angegeben definiert sind, kuppeln.
Diazotierung und Kupplung erfolgen dabei normalerweise in an sich bekannter und dem Fachmann geläufiger Weise.
Die Zwischenstufe der allgemeinen Formel (6) ist auf verschiedenen Wegen zugänglich. Beispielsweise kann eine Verbindung der allgemeinen Formel (2), 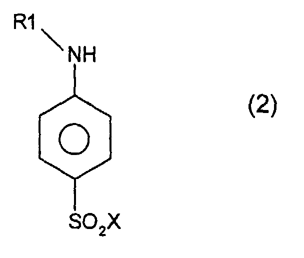 worin R¹ und X die oben genannten Bedeutungen haben, mit Trihalogentriazin und das erhaltene Zwischenprodukt anschließend mit einer Verbindung der allgemeinen Formel (3) 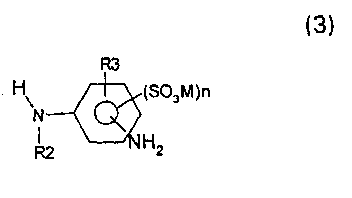 umgesetzt werden.

Es kann aber auch zuerst die Verbindung der allgemeinen Formel (3) mit Trifluortriazin und das erhaltene Zwischenprodukt anschließend mit der Verbindung der allgemeinen Formel (2) umgesetzt werden.

Die genannten Verfahren zur Herstellung der Verbindung der allgemeinen Formel (6) können ebenfalls in an sich bekannter und dem Fachmann geläufigen Weise durchgeführt werden.

So kann beispielsweise die Verbindung der allgemeinen Formel (2) mit Trifluortriazin nach einem kontinuierlichen Verfahren, wie es z. B. in DE-A 27 46 109 oder EP-A 458 110, oder diskontinuierlich bei pH-Werten zwischen 2 und 7, bevorzugt 3 und 6 und bei Temperaturen zwischen 0 und 20°C, bevorzugt 0 und 5°C hergestellt werden.

Ein alternatives Verfahren zur Herstellung der Verbindung der allgemeinen Formel (1) besteht darin, eine Verbindung der allgemeinen Formel (a), 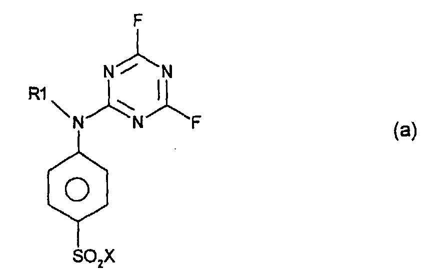 worin R¹ und X die oben genannte Bedeutung haben mit einer Verbindung der Formel (5) 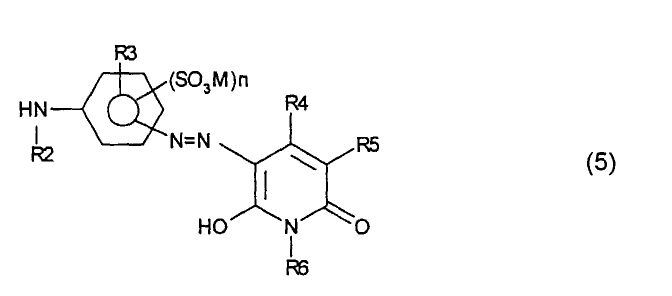 worin R² bis R⁶ und n die oben genannte Bedeutung haben, umzusetzen

Selbstverständlich ist es auch möglich, die Verbindung der allgemeinen Formel (5) zuerst mit Trifluortriazin und das erhaltene Produkt mit einer Verbindung der allgemeinen Formel (2) umzusetzen.

Weiterhin besteht die Möglichkeit eine Verbindung der allgemeinen Formel (5) 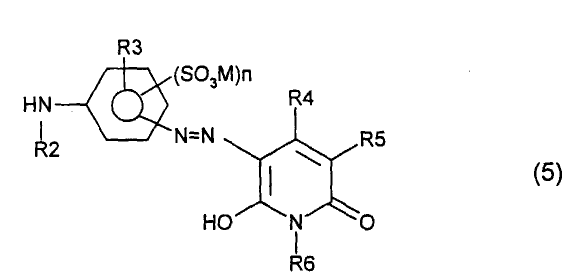 durch Diazotierung eines acetylierten Amins der allgemeinen Formel (3a) 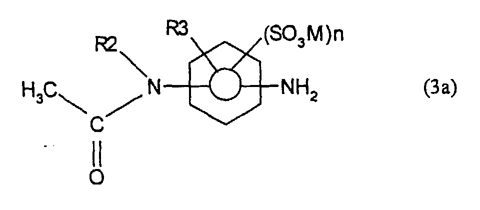 gefolgt von einer Kupplung auf eine Verbindung der allgemeinen Formel (4) und anschließendem Erhitzen auf 90 bis 95°C bei pH-Werten zwischen 0 und 1 oder 12 bis 14, herzustellen.

Bevorzugt werden die erfindungsgemäßen Farbstoffe durch Umsetzung eines Amins der allgemeinen Formel (2) mit Trifluortriazin, mit anschließender Umsetzung mit einem Amin der allgemeinen Formel (3), gefolgt von Diazotierung und Kupplung auf eine Verbindung der allgemeinen Formel (4) hergestellt.

Geeignete aromatische Amine der allgemeinen Formel (2) sind beispielsweise 4-(β-Sulfatethylsulfonyl )anilin, N-Ethyl-4(β-sulfatoethylsulfonyl) anilin, 4-Vinylsulfonylanilin, N-Methyl-4(β-sulfatoethylsulfonyl)anilin und N-Ethyl-4-vinylsulfonylanilin, insbesondere 4-(β-Sulfatoethylsulfonyl)anilin.

Geeignete aromatische Amine der allgemeinen Formel (3) sind beispielsweise: 1,3-Diaminobenzol-4-sulfonsäure, 1,4-Diaminobenzol-3-sulfonsäure, 1,3-Diaminobenzol-4,6-disulfonsäure, 1,4-Diaminobenzol-2,5-disulfonsäure, 1-Chlor-2,4-diaminobenzol-6-sulfonsäure, 2,6-Diaminotoluol-4-sulfonsäure, 2-4-Diaminotoluol-5-sulfonsäure oder 1,3,5-Trimethyl-2,4-diaminobenzol-6-sulfonsäure, insbesondere 1,3-Diaminobenzol-4-sulfonsäure.

Geeignete Kupplungskomponenten der allgemeinen Formel (4) sind beispielsweise:
1-Ethyl-2-hydroxy-4-methyl-pyrid-6-on-5-carbonamid, 1-Methyl-2-hydroxy-3-carbonamido-4-methyl-pyrid-6-on-5-methansulfonsäure, 1-Ethyl-2-hydroxy-3-carbonamido-4-methyl-pyrid-6-on-5-methansulfonsäure, 1-Ethyl-2-hydroxy-4-methyl-5-cyano-pyrid-6-on, insbesondere 1-Ethyl-2-hydroxy-4-methyl-pyrid-6-on-5-carbonamid.

Das aromatische Amin der allg. Formel (3) wird bei pH-Werten zwischen 4 und 8, bevorzugt 5 und 7 und Temperaturen zwischen 0 und 30 °C bevorzugt 5 und 25 °C umgesetzt. Die Diazotierung der erhaltenen Zwischenprodukte der allgemeinen Formel (6) 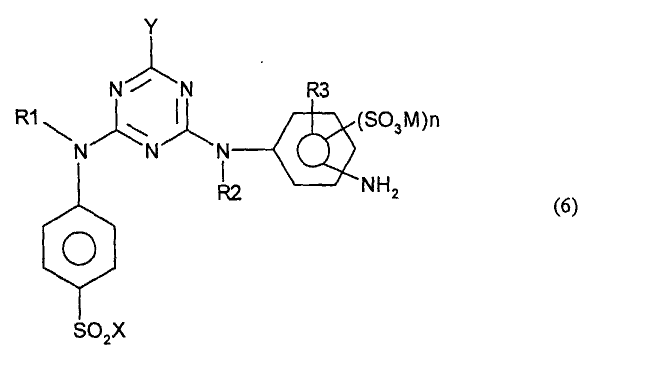 worin R¹ bis R³, M, n X und Y die oben genannte Bedeutung haben, erfolgt in allgemein üblicher Art und Weise mittels Alkalinitrit, beispielsweise NaNO₂ und Mineralsäure, beispielsweise Salzsäure oder Schwefelsäure.

Überraschenderweise wurde gefunden, daß die Diazotierung mit geringeren Säurebedarf verläuft, wenn die Lösung des Zwischenproduktes (6) vor der Diazotierung beispielsweise durch ein Membrantrennverfahren entsalzt wird.

Gegenstand der Erfindung ist daher auch die Diazotierung der Produkte der allgemeinen Formel (6), nach vorgeschalteter Entsalzung beispielsweise durch ein Membrantrennverfahren.

Die Kupplung erfolgt bei pH-Werten zwischen 4 und 8, bevorzugt zwischen 5 und 7 und bei Temperaturen von 0 - 20, bevorzugt 5 - 15 °C.

Die Abscheidung der erfindungsgemäß hergestellten Azoverbindungen der allgemeinen Formel (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.

Die Monoazoverbindungen der allgemeinen Formel (1) eignen sich zum Färben und Bedrucken von hydroxy- und amidgruppenhaltigen Materialien, insbesondere Cellulosefasermaterialien wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe liefern nach den in der Technik für faserreaktive Farbstoffe zahlreich beschriebenen Anwendungs- und Fixierverfahren auf hydroxy- und/oder carbonamidgruppenhaltigen Fasermaterialien gelbe Färbungen mit gutem Farbaufbau und guter Auswaschbarkeit nicht fixierter Farbstoffanteile. Die Farbstoffe der Formel (1) zeichnen sich durch eine hohe Reaktivität, hohe Farbstärke, gute Löslichkeiten und gute Kombinierbarkeit aus. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Darüberhinaus sind die erhaltenen Färbungen gut ätzbar und sehr gut als Kombinationsfarbstoffe in Kombinationsfärbungen mit anderen Farbstoffen geeignet.

Gegenstand der vorliegenden Erfindung ist deshalb auch die Verwendung der erfindungsgemäßen Farbstoffe zum Färben (einschließlich Bedrucken und in der Kombinationsfärbung) von hydroxy- und/oder carbonamidgruppen-haltigen Fasermaterialien bzw. Verfahren zum Färben solcher Fasermaterialien unter Verwendung der erfindungsgemäßen Farbstoffe, indem man diese in gelöster Form auf das Substrat appliziert und die Farbstoffe durch Einwirkung eines alkalisch wirkenden Agens oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffe erfolgt nach allgemein bekannten Verfahren zum Färben und Bedrucken von Fasermaterialien gemäß den bekannten Anwendungstechniken für faserreaktive Farbstoffe. Die Farbstoffe können auch mit Vorteil in die Ausziehfärbeverfahren eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C unter Druck, und gegebenenfalls in Gegenwart von üblichen Färbereihilfsmitteln unter Verwendung von säurebindenden Mitteln und gegebenenfalls neutralen Salzen, wie Natriumchlorid oder Natriumsulfat, Färbungen in sehr guten Farbausbeuten und mit ausgezeichnetem Farbaufbau und gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Ebenfalls erhält man nach den üblichen Druckverfahren für Cellulosefasern, die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltender Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffe erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, und Dinatriumhydrogenphosphat.

Durch die Behandlung der Farbstoffe mit den säurebindenden Mitteln, gegebenenfalls unter Wärmeeinwirkung, werden die Farbstoffe chemisch an die Cellulosefaser gebunden: Insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachfolgenden Beispiele dienen zur Erläuterung der Erfindung.

Die in den Beispielen formelmäßig beschriebenen Verbindungen sind in Form der freien Säure angegeben; im allgemeinen werden sie in Form ihrer Alkalimetallsalze, wie Lithium oder Natriumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

28,1 g 4-(β-Sulfatoethylsulfonyl)anilin werden mit 4,2 g Natriumfluorid in 500 ml Eiswasser gelöst, und mit 14 g Trifluortriazin nach einem Verfahren ähnlich dem in der DE 2746109 beschrieben umgesetzt.
178,3 g 1,3-Diaminobenzol-4-sulfonsäure werden in 60 ml Wasser bei pH 6,5 suspendiert und hinzugegeben. Der Ansatz wird nach 4 Stunden bei 5 - 10 °C und pH 6,5 gerührt und anschließend entsalzt.

Die erhaltene Lösung wurde in üblicher Weise diazotiert und 25 g 1-Methyl-2-hydroxy-3-sulfomethyl-4-methyl-pyrid-6-on-5-carbonamid werden hinzugegeben. Der pH-Wert wurde 1 Stunde bei 10 °C bei 6,5 gehalten, danach werden 5 g Natriumdihydrogenphosphat zugegeben, anschließend wird der pH-Wert auf 7,5 erhöht, 2 Stunden nachgerührt und der Farbstoff der folgenden Konstitution durch Aussalzen oder Sprühtrocknen isoliert.

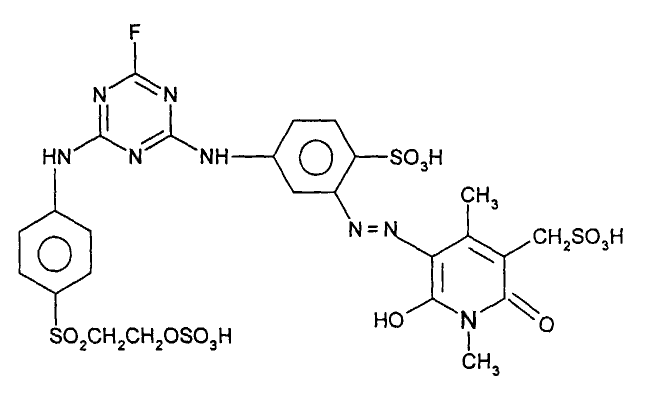

Er färbt und bedruckt Baumwolle in brillanten gelben Tönen λₘₐₓ = 424 nm

### Beispiel 2

28,1 g 4-(β-Sulfatoethylsulfonyl)anilin werden mit 4,2 g Natriumfluorid in 500 ml Eiswasser gelöst und mit 14 g Trifluortriazin nach einem Verfahren ähnlich dem in der DE 2746109 beschrieben umgesetzt. 17,8 g 1,4-Diaminobenzol-2-sulfonsäure werden in 60 ml Wasser bei pH 6,5 suspendiert und hinzugegeben und anschließend entsalzt.
Die erhaltene Lösung wird in bekannter Art und Weise diazotiert und 26 g 1-Ethyl-2-hydroxy-3-sulfomethyl-4-methyl-pyrid-6-on-5-carbonamid werden hinzugegeben. Der pH-Wert wird 1 Stunde bei 10 °C bei 6,5 gehalten, danach auf 7,5 erhöht, nach 2 Stunden nachgerührt, gepuffert und der Farbstoff der folgenden Konstitution durch Aussalzen oder Sprühtrocknen isoliert.

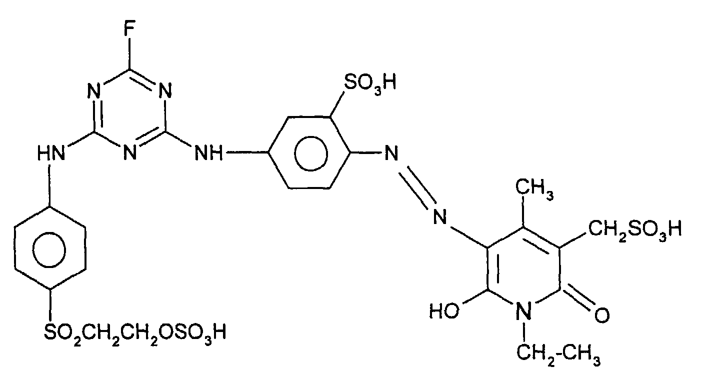

Er färbt und bedruckt Baumwolle in brillanten goldgelben Tönen.
λₘₐₓ = 439 nm.

### Beispiel 3

28,1 g 4-(β-Sulfatoethylsulfonyl)anilin werden mit 4,2 g Natriumfluorid in 500 ml Eiswasser gelöst und mit 14 g Trifluortriazin nach einem Verfahren ähnlich dem in der DE 2746109 beschrieben umgesetzt. 17,8 g 1,3-Diaminobenzol-4-sulfonsäure werden in 60 ml Wasser bei pH 6,5 suspendiert und hinzugegeben. Der Ansatz nach 4 Stunden bei 5 - 10 °C und 6,5 gerührt und anschließend entsalzt.
Die erhaltene Lösung wurde in bekannter Art und Weise diazotiert und 18 g 1-Ethyl-2-hydroxy-4-methyl-pyrid-6-on-5-carbonamid hinzugegeben. Der pH-Wert wird 1 Stunde bei 10 °C bei 5,5 gehalten, danach auch 7,5 erhöht, nach 2 Stunden nachgerührt mit 5 g einer Mischung aus Natriumdihydrogenphosphat und Dinatriumhydrogenphosphat gepuffert und der Farbstoff der folgenden Konstitution durch Aussalzen oder Sprühtrocknen isoliert.

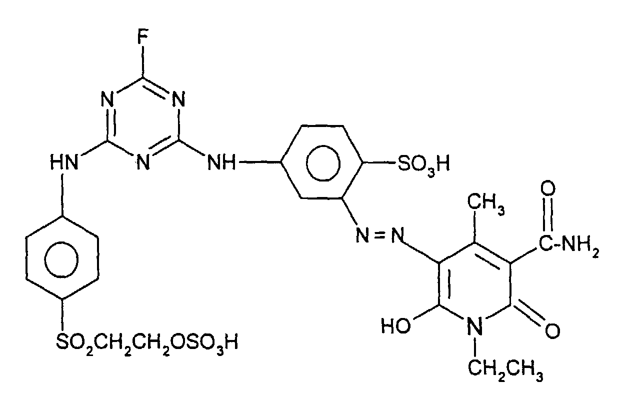

Er färbt und bedruckt Baumwolle in brillanten gelben Tönen. λₘₐₓ = 425 nm.

### Beispiel 4

30,9 g 4-(β-Sulfatoethylsulfonyl)anilin werden mit 4,2 g Natriumfluorid in 500 ml Eiswasser gelöst und mit 14 g Trifluortriazin nach einem Verfahren ähnlich dem in der DE 2746109 beschrieben umgesetzt.
17,8 g 1,3-Diaminobenzol-4-sulfonsäure wurden in 60 ml Wasser bei pH 6,5 suspendiert und hinzugegeben. Der Ansatz wurde nach 4 Stunden bei 5 - 10 °C und pH 6,5 gerührt und anschließend entsalzt.

Die erhaltene Lösung wird in üblicher Weise diazotiert und 25 g 1-Methyl-2-hydroxy-3-sulfomethyl-4-methyl-pyrid-5-carbonamid werden hinzugegeben. Der pH-Wert wird 1 Stunde bei 10 °C bei 6,5 gehalten, danach auch 7,5 erhöht, 2 Stunden nachgerührt und der Farbstoff der folgenden Konstitution durch Aussalzen oder Sprühtrocknen isoliert.

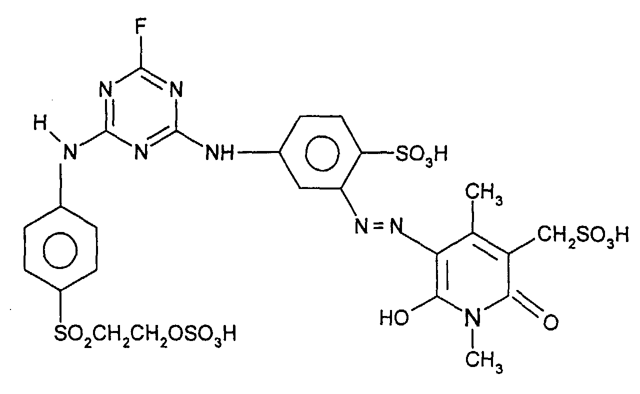

Er färbt und bedruckt Baumwolle in brillanten gelben Tönen.
λₘₐₓ = 424 nm.

### Beispiel 5

30,9 g N-Ethyl-4-(β-sulfatoethylsulfonyl)anilin werden mit 4,2 g Natriumfluorid in 500 ml Eiswasser gelöst und mit 14 g Trifluortriazin nach einem Verfahren ähnlich dem in der DE 2746109 beschrieben umgesetzt. 17,8 g 1,3-Diaminobenzol-4-sulfonsäure werden in 60 ml Wasser bei pH 6,5 suspendiert und hinzugegeben. Der Ansatz nach 4 Stunden bei 5 - 10 °C und pH 6,5 gerührt und anschließend entsalzt.

Die erhaltene Lösung wird in üblicher Weise diazotiert und 18 g 1-Ethyl-2-hydroxy-4-methyl-pyrid-6-on-5-carbonamid werden hinzugegeben. Der pH-Wert wird 1 Stunde bei 10 °C bei 5,5 gehalten, danach auch 7,5 erhöht, 2 Stunden nachgerührt und der Farbstoff der folgenden Konstitution durch Aussalzen oder Sprühtrocknen isoliert.

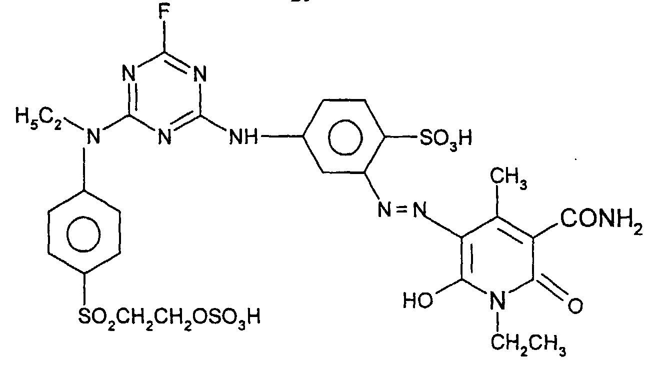

Er färbt und bedruckt Baumwolle in brillanten gelben Tönen.
λₘₐₓ = 424 nm.

Analog zu den Beispielen 1 - 5 wurden folgende Verbindungen miteinander umgesetzt:

| | Amine der Formel (2) | Amine der Formel (3) | Kuppler | Farbton |
|---|---|---|---|---|
| 6 | 4-(β-Sulfatoethylsulfonyl)anilin | 1,3-Diaminobenzol-4-sulfonsäure | 1-Ethyl-2-hydroxy-3-carbonamido-4-methyl-pyrid-6-on-5-methansulfonsäure | gelb |
| 7 | N-Ethyl-4-(β-sulfatoethylsulfonyl)anilin | 1,4-Diamino-benzol-2-sulfonsäure | 1-Ethyl-2-hydroxy-3-carbonamdo-4-methyl-pyride-6-on-5-methansulfonsäure | goldgelb |
| 8 | N-Ethyl-4-(β-sulfatoethylsulfonyl)anilin | 1,3-Diaminobenzol-4,6-disulfonsäure | 1-Ethyl-2-hydroxy-4-methyl-pyrid-6-on-5-carbonamid | gelb |
| 9 | 4-(β-Sulfatoethylsulfonyl)anilin | 1,3-Diaminobenzol-4,6-disulfonsäure | 1-Ethyl-2-hydroxy-4-methyl-pyrid-6-on-5-carbonamid | gelb |
| 10 | 4-(β-Sulfatoethylsulfonyl)anilin | 2,56-Diamino-toluol-4-sulfonsäure | 1-Ethyl-2-hydroxy-4-methyl-pyrid-6-on-5-carbonamid | gelb |
| 11 | 4-(β-Sulfatoethylsulfonyl)anilin | 2,4-Diamino-toluol-5-sulfonsäure | 1-Ethyl-2-hydroxy-4-methyl-pyrid-6-on-5-carbonamid | gelb |
| 12 | 4-(β-Sulfatoethylsulfonyl)anilin | 1,3,5-Trimethyl-2,4-diaminobenzol-6-sulfonsäure | 1-Ethyl-2-hydroxy-4-methyl-pyrid-6-on-5-carbonamid | gelb |
| 13 | 4-(β-Sulfatoethylsulfonyl)anilin | 1,4-Diamino-benzol-2-sulfonsäure | 1-Ethyl-2-hydroxy-4-methyl-pyrid-6-on-5-carbonamid | goldgelb |
| 14 | 4-(β-Sulfatoethylsulfonyl)anilin | 1,3-Diaminobenzol-4-sulfonsäure | 1-Ethyl-2-hydroxy-5-cyano-pyrid-6-on | gelb |
| 15 | 4-(β-Sulfatoethylsulfonyl)anilin | 1,3-Diaminobenzol-4,6-disulfonsäure | 1-Ethyl-2-hydroxy-4-methyl-5-cyano-pyrid-6-on | gelb |
| 16 | 4-(β-Sulfatoethylsulfonyl)anilin | 1,4-Diaminobenzol-3-sulfonsäure | 1-Ethyl-2-hydroxy-4-methyl-5-cyano-pyrid-6-on | goldgelb |

### Beispiel 7:

100 g Farbstoff aus Beispiel 3 werden bei 0 °C in 1,2 Liter Wasser gelöst und mit Natronlauge ein pH-Wert von 10,5 - 11 eingestellt und 2 Stunden gehalten. Danach wird mit Salzsäure auf pH 7,5 gestellt und der Farbstoff der folgenden Konstitution durch Aussalzen oder Sprühtrocknen isoliert.

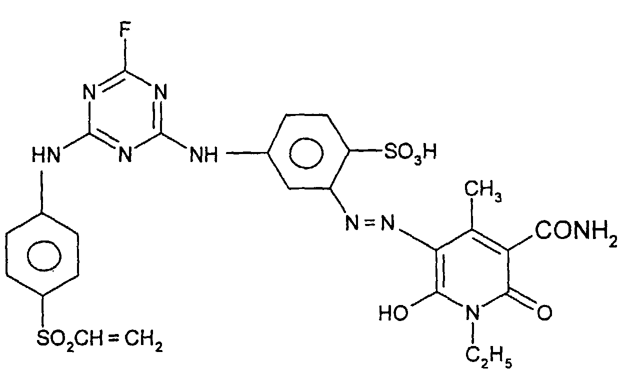

## Patentansprüche

1. Monoazoverbindung der allgemeinen Formel (1) 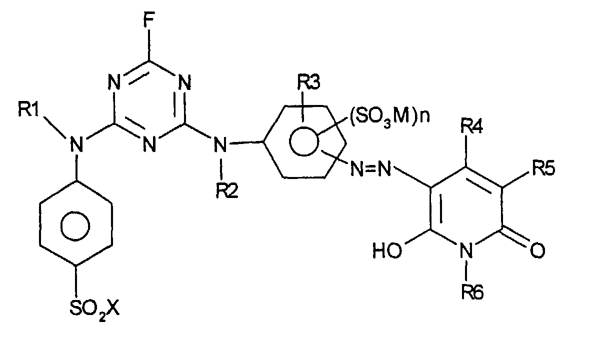 worin bedeuten:
M ist Wasserstoff oder ein Alkalimetall, wie Natrium, Kalium oder Lithium, oder ein Äquivalent eines Erdalkalimetalls;
R¹ ist ein Wasserstoffatom oder eine geradkettige oder verzweigte Alkylgruppe von 1 bis 4 C-Atomen, die durch Halogen, Hydroxy, Cyano oder Sulfo substituiert sein kann;
R² ist ein Wasserstoffatom oder eine geradkettige oder verzweigte Alkylgruppe von 1 bis 4 C-Atomen, die durch Halogen, Hydroxy, Cyano oder Sulfo substituiert sein kann;
R³ ist Wasserstoff oder eine geradkettige oder verzweigte Alkylgruppe von 1 bis 4 C-Atomen, die durch Halogen, Hydroxy, oder Cyano substituiert sein kann, eine Alkoxygruppe von 1 bis 4 C-Atomen, die durch Halogen, Hydroxy oder Cyano substituiert sein kann, Halogen, Carboxy oder Phenyl;
R⁴ eine geradkettige oder verzweigte Alkylgruppe von 1 bis 4 C-Atomen, die durch Halogen, Hydroxy oder Cyano substituiert sein kann, eine Alkoxygruppe von 1 bis 4 C-Atomen, die durch Halogen, Hydroxy oder Cyano substituiert sein kann, Halogen, Carboxy oder Phenyl;
R⁵ ist Carbonamido, Cyano oder Sulfomethyl;
R⁶ ist ein geradkettiger oder verzweigter Alkylrest von 1 bis 4 C-Atomen;
n die Zahl 0, 1 oder 2;
X Vinyl ist oder Ethyl, das in β-Stellung durch einen Substituenten substituiert ist, der unter Einwirkung eines alkalisch wirkenden Mittels unter Bildung der Vinylgruppe eliminierbar ist, wie beispielsweise Chlor, Brom, p-Toluylsulfonyloxy, Phosphato und Sulfato;

2. Monoazoverbindung nach Anspruch 1, dadurch gekennzeichnet, daß R² und R ³ Wasserstoff und R⁶ Methyl oder Ethyl bedeuten.

3. Monoazoverbindungen nach mindestens einem der Ansprüche 1 oder 2, dadurch gekennzeichnet, daß n gleich 1 und R⁴ Methyl bedeuten.

4. Monoazoverbindung nach mindestens einem der Ansprüche 1 bis 3, dadurch gekennzeichnet, daß R¹ Wasserstoff und R⁵ Carbonamido bedeuten und sich die beiden Aminogruppen im aromatischen Amin der allgemeinen Formel (3) in meta-Position befinden.

5. Monoazoverbindung gemäß mindestens einem der Ansprüche 1 bis 3, dadurch gekennzeichnet, daß R¹ Wasserstoff und R⁵ Sulfomethyl bedeuten und sich die beiden Aminogruppen im aromatischen Amin der allgemeinen Formel (3) in meta-Position befinden.

6. Monoazoverbindung gemäß mindestens einem der Ansprüche 1 bis 5, dadurch gekennzeichnet, daß X gleich β-Sulfatoethyl ist.

7. Verfahren zur Herstellung einer Monoazoverbindung nach Anspruch 1 dadurch gekennzeichnet, daß sie aus den Komponenten der Formeln (2) 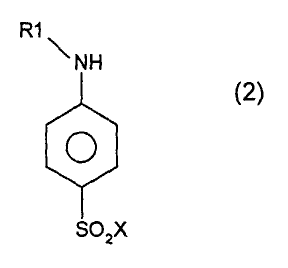 Trifluortriazin, der Formel (3) 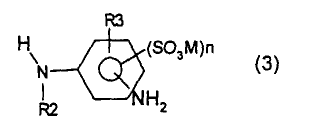 und der Formel 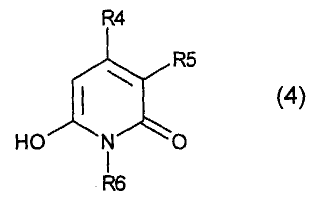 aufgebaut wird.

8. Verfahren zur Herstellung der Farbstoffe nach Anspruch 7, dadurch gekennzeichnet, daß man die Diazokomponente der allgemeinen Formel (6) 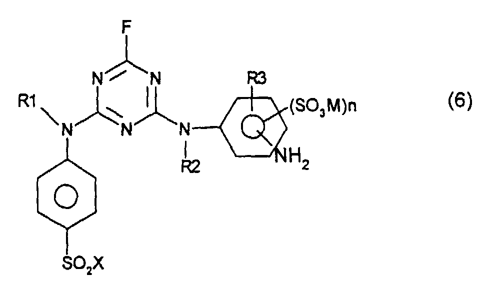 vor der Diazotierung entsalzt

9. Verwendung einer Monoazoverbindung der allgemeinen Formel (1) von Anspruch 1 zum Färben von hydroxy- und/oder carbonamidgruppenhaltigem Material, insbesondere Fasermaterial.
